# EUROPEAN PATENT SPECIFICATION

(11) **EP 4 345 357 B1**
(45) Date of publication and mention of the grant of the patent: **05.11.2025**
(21) Application number: 22198361.2
(22) Date of filing: 28.09.2022
(51) Int. Cl.: F16L 55/13, F16B 43/02, F16B 43/00, F16B 19/10, F16B 19/02, F16B 13/06

(54) **CLOSURE DEVICE FOR TIGHT SEALING A HOLE**
VERSCHLUSSVORRICHTUNG ZUM DICHTEN VERSCHLIESSEN EINES LOCHES
DISPOSITIF DE FERMETURE POUR ÉTANCHER UN TROU

(43) Date of publication of application: 03.04.2024
(73) Proprietor: SFC KOENIG AG, 8953 Dietikon (CH)
(72) Inventor: LORENZELLI, Luca, 8953 Dietikon (CH); RYSER, Andreas, 8953 Dietikon (CH)
(74) Representative: Liebetanz, Michael

(56) References cited:
- EP-A1- 0 877 193
- EP-A1- 3 312 105
- US-A- 3 525 365
- US-A1- 2003 178 793

## Description

### TECHNICAL FIELD

The present invention relates to a closure device for tight sealing a hole, comprising a sleeve shaped base body and an expander element with the features of the preamble of claim 1.

### PRIOR ART

Such closure devices are primarily used in automotive, pneumatic, hydraulic and aerospace applications, such as for example as for the seals of bores in vehicle engines or of bores in hydraulic or pneumatic valves etc.. These closure devices can be described as pull expanders used in bores of apparatus bodies.

WO 2012/107059 A1 discloses a closure element for internally pressurized bores in components comprising a closure disc that can be inserted into the bore largely without any play and that can be spread apart by an axially applied tension and can thereby be pressed radially against the inner wall of the bore to be closed. Said closure disc is the head part of a tensioning pin which can be tensioned and that this tensioning pin has a predetermined breaking point at which it can be separated from the closure disc upon reaching a specific tensile stress.

US 5,078,294 A discloses a method for tight sealing of a hole comprising forcing an essentially bushing- or tube-shaped plug into the hole and radially expanding the plug wall along at least one axial segment to produce a tight seal of the plug against the hole, wherein the plug is anchored positively and axially in the hole in order to prevent axial piston-like movement of the plug in the hole. The tightly sealed hole arrangement of the invention comprises as essentially bushing-shaped or tubular plug with a radially spread axial part fitting tightly in the hole for sealing the hole, and wherein a positively axially acting locking arrangement is provided between the hole and the plug, in order to provide a piston-like displacement of the plug in the hole, and wherein the sealing and the locking parts are provided axially at different points. The method is accomplished using an expansion element by pulling this element into the plug. An opening is provided in the base of the bushing-shaped plug, through which a pulling armature which can be broken off later and with an expansion element at the end is guided, and the latter is pulled into the plug. Expansion element comprises a frustoconical end expansion part, followed by a sealing part with slightly smaller diameter for through hole, and next to that, with a breaking point, a pulling element. Pulling element is guided through opening and expansion element is pulled into bushing at plug by pulling, whereby its wall, possibly roughened, is pressed radially against the hole wall which may also be roughened to form sealing part. Locking part is formed by the intermeshing of the two threads. After expansion element has been driven in, pulling element is broken off at breaking point.

US 2003/178793 A1 discloses a sealing plug for blind installation in a suitable hole, which sealing plug comprises a sleeve having one end closed, a stem having a head at least part of which is radially enlarged with respect to the remainder of the stem, the stem head being within the sleeve and the stem protruding from the open end of the sleeve by passing through a part of the sleeve which has an internal cross-sectional dimension less than that of the stem head, the stem head having a shoulder and there being an abutment of sleeve material against at least the radially outer part of the shoulder, the stem head being of a material which is harder than that of the sleeve and being formed with a weakened portion at a position intermediate the head and the part of the stem remote therefrom, whereby, when the sealing plug is inserted in the suitable hole, with the sleeve entirely within the hole, and increasing tension force is applied to the stem with respect to the sleeve, axial compression is applied by the shoulder to engage with the hole, and thereafter the stem breaks at the weakened portion so that the head remains within the sleeve.

### SUMMARY OF THE INVENTION

Based on the prior art, it is an object of the invention to provide an improved quality of the closure device, with a lightweight material resistant to corrosion.

The invention is based on a closure device with the features of claim 1.

Both the sleeve-shaped base body and the expander element with the splaying body as well as the tensioning pin or pulling element and the predetermined breaking point in a breaking groove are made out of aluminum alloys and produced by cold forming process and subsequent hardening process. This makes the closure element and pull expander fully resistant against corrosion, therefore extending its range of applications and in general its fatigue life lifetime. The material compatibility of the two components of the expander, and therefore the compatibility of their physical properties, especially the thermal expansion coefficient, improves the durability of the expander by reducing the incidence of internal cracks over several temperature cycles, both at the surface and in the bulk of the material. The cold forming and hardening processes used to manufacture the parts, also improve the overall quality of the expander by further reducing the occurrence and probability of cracks formation both at the surface and in the bulk of the material. Most of the parts that require sealing in electric vehicles are made out of aluminum, to reduce the weight and because it's non-magnetic. Therefore, a full-aluminum sealing plug brings a clear advantage for applications in E-mobility, because it ensures the compatibility of the physical properties between the sealing plug and the hosting body.

The improved material quality, especially the reduction of cracks formation in the bulk given by the cold forming manufacturing process makes it possible to increase the assembling force of the expander compared to standard aluminum parts manufactured by turning process.

The peculiar characteristic of the described closure element is that both the sleeve-shaped base body and the splaying body, as well as the tensioning pin/pulling element and the predetermined breaking point area are made out of aluminum alloys. The breaking point area is a part of the base body having a groove, i.e. the body is of lesser diameter. Aluminum alloys can have different compositions, preferred aluminum alloys are Al-6056 for the mandrel and Al-6060 for the sleeve. The base body and splaying body are produced by a cold forming process and subsequent hardening process, especially a T6 hardening process is done after cold forming of the part. This characteristics makes the expander fully resistant against corrosion, therefore extending its range of applications and in general its fatigue life.

The additional advantages given by the material compatibility, new manufacturing process and surface treatment, inherently bring additional advantages related to the optimization of the geometry design.

The closure element is made out of aluminum for inserting into a bore in a component, such as into a bore in an engine, a valve block manifold, a hydraulic unit or a container. The said closure element consists of a sleeve-shaped base body that can be inserted into a bore, the outer circumference of which in the fitted state lies tight against the inner surface of the bore. A splaying body that can brace this base body in the bore, is characterized in that the base body and the splaying body, connected to the tension bolt via a predetermined breaking point, can be positioned in the bore, and that by applying a force to the tension bolt, the splaying body can be pushed into the base body. When the splaying body is fully inside the splaying body, the predetermined breaking area shears off the splaying body, so that the splaying body presses the base body tight against the wall of the bore to be closed by producing a radial pressure on the inner wall of the base body. The easy-to-handle tensioning pin facilitates the installation of the closure element in the bore. Since the base body is pressed against an outer counter holder during the installation process, it can be inserted into a continuously smooth bore. The limitation of the tensile stress effected by design by the predetermined breaking area, also ensures that the bore is closed with a defined closing force, which makes the process highly accurate and reproducible.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematic simplified view of a first embodiment of the closure device in the mounted position positioned in a bore in an apparatus body;
- Fig. 2: shows a schematic simplified view of Fig. 1 in a position with the base body positioned in the bore and the pulling element not yet pulled in the position of Fig. 1;
- Fig. 3: shows a detail view of the sleeve-shaped base body according to a modified embodiment;
- Fig. 4: shows a detail view of the sleeve-shaped base body according to a further modified embodiment;
- Fig. 5: shows a further detail view of a modified expander element with an hollow head cavity;
- Fig. 6: shows a cross-section view of the base body;
- Fig. 7: shows a side view of the expander element; and

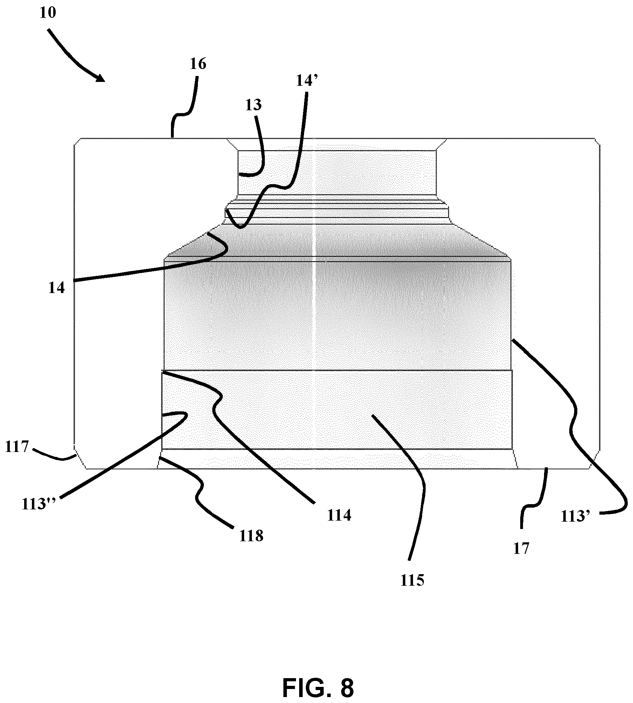

- Fig. 8: shows a cross-section view of the base body.

### DESCRIPTION OF PREFERRED EMBODIMENTS

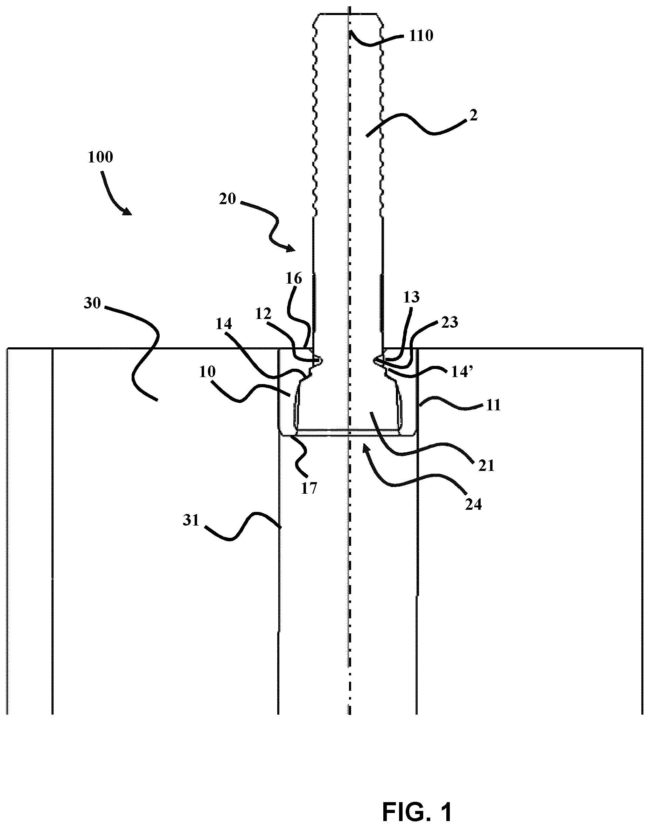

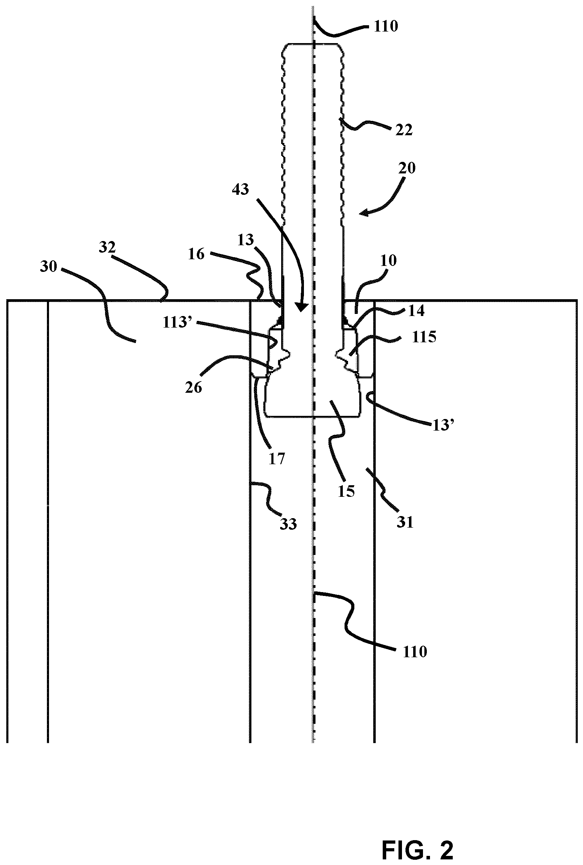

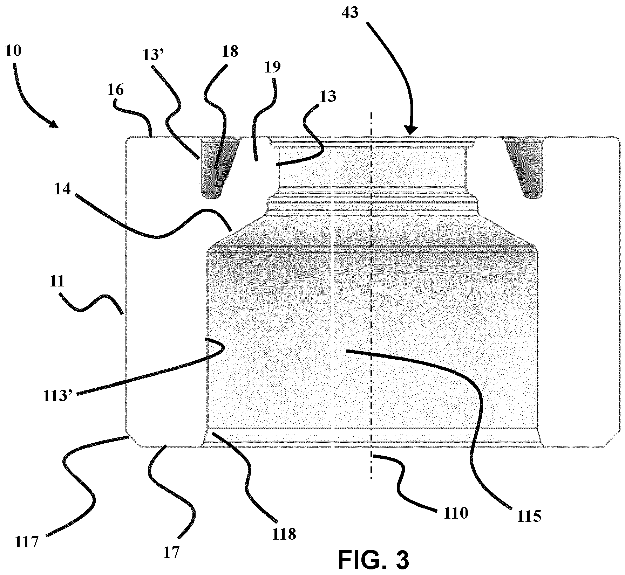

Fig. 1 shows a schematic view of a first embodiment of the closure device in the mounted position in a bore in an apparatus body. Fig. 2 shows the closure device 100 of Fig. 1 in a position where the base body 10 is positioned in the smooth bore 31 but the expander element 20 is not yet pulled back, i.e. the frustoconical head 24 is still in the bore 31 outside of the head receiving portion 115. Fig. 3 shows the elements of Fig. 1 after rupture of the pulling element 22 at the breaking groove 23.

Such a closure device 100 comprises a sleeve-shaped base body 10 and an expander element 20, wherein the expander element 20 comprises a splaying body 21 and a pulling element 22 with a breaking groove 23 between them. Beside a breaking groove 23, it can be a structurally weaker section. The splaying body 21 has a frustoconical head 15 with the smaller diameter of the head oriented towards the breaking groove 23. The sleeve-shaped base body 10 has in the longitudinal direction 110 a head receiving portion 115 followed by a tapering shoulder portion 14 and a central opening 12 having an inner cylindrical surface 13 configured to allow to pass the outer diameter of the pulling element 22.

This closure device 100 is shown as being mounted in a smooth bore 21 of an apparatus body 30. The outer diameter of the base body 10 is configured to be introduced into the smooth bore 21 of the apparatus body 30 without almost no play. The base body 10 is of hollow cylindrical design with an outer cylindrical surface 11 having preferably two parallel surfaces 16 and 17. The outside directed surface 16 is provided directed to the mouth of the smooth bore 31 whereas the inside directed surface 17 is oriented towards the depth of said bore 31.

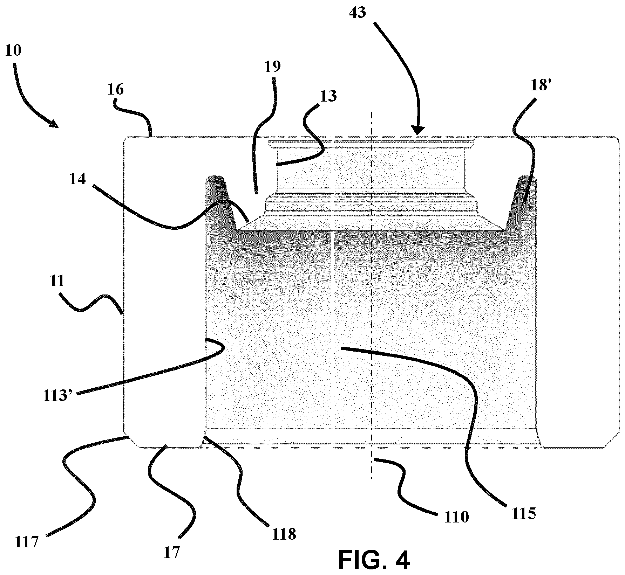

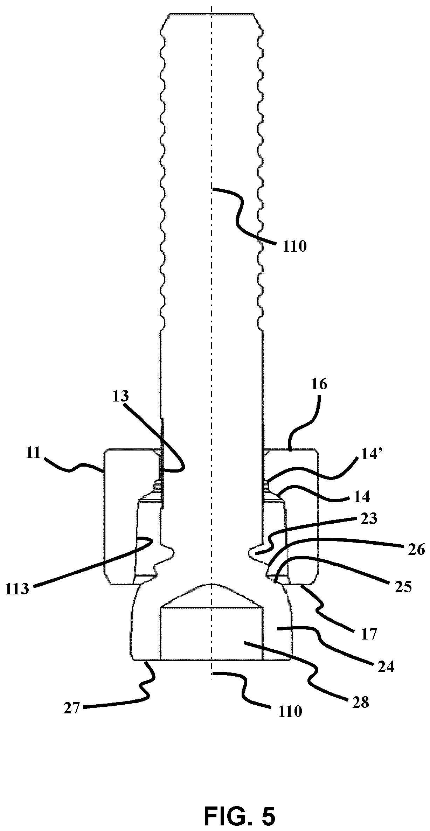

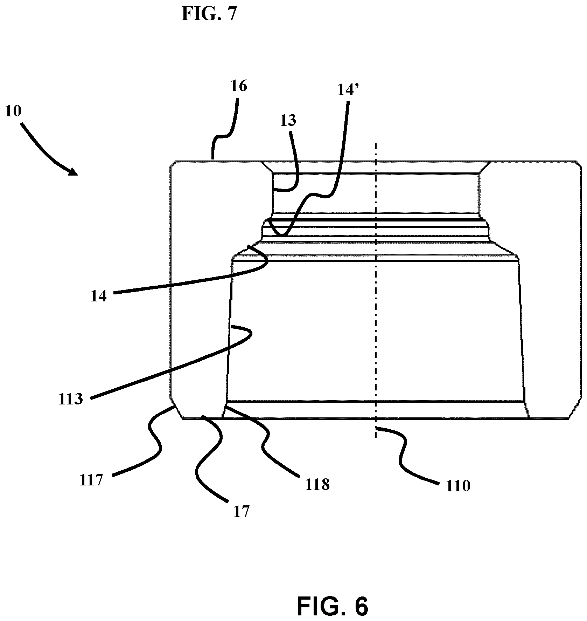

The hollow cylindrical base body 10 has at least three different portions between the two surfaces 16 and 17. Starting from the inside with surface 17, it comprises a head receiving portion 115 followed by a tapering shoulder portion 14 and an inner cylindrical surface portion 13. The head receiving portion 115 can have a cylindrical surface 113' like in the embodiment of Fig. 4 or a conical surface 113 like in the embodiments of Fig. 5 or Fig. 6.

Fig. 3 shows a detail view of an embodiment of the base body 10. The embodiment of Fig. 3 has a circumferential groove 18 in the outside directed surface 16 creating an inner guiding wall 19. There, the circumferential groove 18 can have - in radial direction - an outer cylindrical groove surface 13'. In its longitudinal direction 110 the surface 13' can be in the essentially same radial distance as the cylindrical surface 113' of the head receiving portion and being parallel to the surface 13, creating a similar diameter comprising wall of the base body 10 (between the outer surface 11 and the inner surface 113' or 13').

The feature of a cut in the lower part of the sleeve facilitates the insertion of the mandrel head 24 either by progressively enhancing the bending of the sleeve 10 on itself or by reducing the resistance force during the installation of the expander 20. Therefore, it reduces the risk of breaking the mandrel/pulling expander 22 before the head 24 is completely inside the sleeve 10.

It is noted that the groove 18 can also be inside the sleeve as groove 18'. Fig. 5' shows a detail view of the sleeve-shaped base body according to such a further modified embodiment. "Inside" refers to the groove 18' manufactured as a circular groove adjacent to the inner walls of the sleeve, with its main symmetry axis 110 coincident with the main symmetry axis of the expander. Therefore, in this situation, the groove is not visible when the mandrel-sleeve system is in its pre-assembled state. Here, the head 15 presses on the shoulder portion 14 and the circumferential groove 18' allows the expansion of this part of the sleeve, while the wall of the sleeve with its cylindrical surface 113' extends from the inside directed surface until the depth of the inner cylindrical groove 18'.

This feature brings some advantage similar to the embodiment with a conical inner shape 113 of the sleeve 10, which causes a position-dependent increasing force when the head 24 of the mandrel 20 is pulled inside the sleeve 10. The mandrel head is always conical. Regarding the sleeve, Fig. 3 and 4 refer to a cylindrical sleeve, while Fig. 6 refers to the conical case.

Towards the inside directed surface 17, the edge surface can be chamfered surfaces 117 and 118. External chamfered surface 117 of e.g. 45 degree inclination allows an easier introduction of the base body 10 in the smooth bore 31 with its cylindrical bore surface 33. The inner chamfered surface 118 allows an easier introduction and longitudinal movement along longitudinal direction 110 of the head portion 15.

Fig. 5 shows a further detail view of a modified expander element 20 with an hollow head cavity 28. Cylindrical inner head receiving portions 115 can comprise a hollow head cavity 28 as shown in Fig. 6 as well. This hollow head cavity 28 can be provided in with grooves 18 or 18'. In case of a conical inner surface 113 of the sleeve, i.e. the base body 10, the angle can be between 1° and 10°, especially between 3° and 7° and especially 5°.

The cavity 28 in the mandrel head 24 reduces the shear force on the sleeve and increases the radial component of the force after installation by allowing some elastic deformation of the mandrel head in the radial direction.

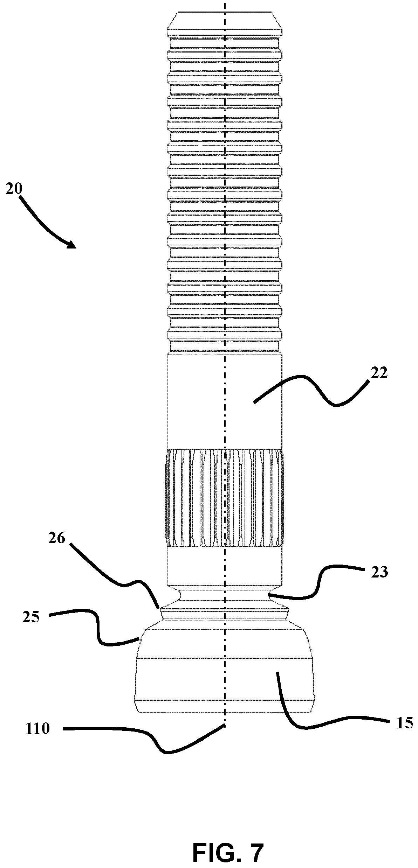

Fig. 6 shows a cross-section view of the base body 10 and Fig. 7 shows a side view of the expander element 20.

Compared to the actual state of the art expander, the present invention allows for a larger ratio between the diameters of the tensioning pin 2 and the breaking groove 23, as well as a larger ratio between the diameters of the head 15 and the inner diameter of the base body 10. The first allows to have higher installation force and a better defined breaking section, while the latter allows to reduce the shear resistance in the installation phase and improve the radial transmission of plastic deformation.

A larger shaft diameter is chosen for higher setting force; an increased head diameter to sleeve wall thickness ratio is chosen for optimized installation,

The ratio of the diameter of the breaking section d_{groove} compared to the diameter d_{shaft} of the pulling shaft 22 can be chosen larger, i.e. d_{shaft}/d_{groove} ratio is larger than for known steel mandrel. Such a larger ratio statistically improves the reliability of the installation process over very large numbers of repetitions.

This modification is possible thanks to the lower density of aluminum, which allows to keep a low weight of the expander despite the larger diameter of the mandrel shaft. It was found that the separation of a sealing part from a locking part of steel plugs as disclosed in prior art documents using steel expanders can be unified by material treatment by cold forming of the part itself and engineering the outer surface of the sleeve by hardening process.

Both functions of sealing and anchoring of the outer surface of the sleeve 10 to the inner surface of the bore are achieved by material hardening and treatment by cold forming process, roughness optimization and subsequent further surface hardening which increases the hardness of the micro-asperities on the surface. In other words: the sleeve and the expander are produced by cold forming, which increases the material hardness and improves the surface roughness properties. Then, a subsequent T6 hardening process, to increase the material robustness even further.

### LIST OF REFERENCE SIGNS

| | | | |
|---|---|---|---|
| 10 | base body | 25 | tapered portion |
| 11 | outer cylindrical surface | 26 | ridge portion |
| 12 | bore | 27 | inner head surface |
| 13 | inner cylindrical surface | 28 | hollow head cavity |
| 13' | cylindrical groove surface | 30 | apparatus body |
| 14 | shoulder portion | 31 | smooth bore |
| 14' | further shoulder portion | 32 | outer surface |
| 15 | head of mandrel | 33 | cylindrical bore surface |
| 16 | outside directed surface | 43 | outer bore section in base body |
| 17 | inside directed surface | | |
| 18 | circumferential groove (from outside) | 100 | closure device |
| | | 110 | longitudinal axis |
| 18' | circumferential groove (from inside) | 113 | conical surface |
| | | 113' | cylindrical surface |
| 19 | inner guiding wall | 113" | cylindrical surface beyond shoulder |
| 20 | expander element | | |
| 21 | splaying body | 114 | shoulder step |
| 22 | tensioning pin / pulling element | 115 | head receiving portion |
| | | 117 | chamfered surface |
| 23 | breaking groove | 118 | chamfered surface |
| 24 | frustoconical head | 120 | longitudinal axis |

## Claims

1. Closure device (100) comprising a sleeve-shaped base body (10) and an expander element (20), wherein the expander element (20) comprises a splaying body (21) and a pulling element (22) with a breaking groove (23) between them, wherein the splaying body (21) has a frustoconical head with the smaller diameter oriented to the breaking groove (23), wherein the base body (10) is sleeve-shaped, comprises a central bore with an outer directed section (43) and has in the longitudinal direction (110) from an inside-bore directed surface (17) to an outside directed surface (16) a head receiving portion (115) followed by a tapering shoulder portion (14) and a central opening (12) having an inner cylindrical surface (13) with an inner guiding wall (19) configured to allow to pass the outer diameter of the pulling element (22), wherein the sleeve-shaped base body (10) is made of aluminum or an aluminum alloy,
**characterized in that**
the expander element (20) is made of aluminum or an aluminum alloy and **in that** a circumferential groove (18, 18') is provided in the inner guiding wall (19) around the outer directed section (43) of the central bore of the sleeve-shaped base body (10).

2. Closure device (100) according to claim 1, wherein the circumferential groove (18) is provided in the outside directed surface (16) of the base body (10).

3. Closure device (100) according to claim 1, wherein the circumferential groove (18') is provided from the inside of the head receiving portion (115) of the base body (10).

4. Closure device (100) according to any one of claims 1 to 3, wherein the circumferential groove (18, 18') has an outer cylindrical surface (13') in a radial distance from the central axis of the base body (10) which radial distance is not lesser than the smallest diameter of the head receiving portion (115).

5. Closure device (100) according to any one of claims 1 to 4, wherein the head receiving portion (115) has a cylindrical inner surface (113').

6. Closure device (100) according to any one of claims 1 to 4, wherein the head receiving portion (115) has a conical inner surface (113) tapering towards the outside directed surface (16).

7. Closure device (100) according to any one of claims 1 to 6, wherein the further shoulder portion (14') and the shoulder portion (14) are separated by a circumferential recess.

8. Closure device (100) according to claim 7, wherein the expander element (20) comprises a circumferential ridge (26) between the breaking groove (23) and the tapered portion (25) of the frustoconical head (24) which is positioned to be lodged in the circumferential recess, when the frustoconical head (24) is lodged in the base body (10) and the portion (25) is in contact with the shoulder portion (14).

9. Closure device (100) according to any one of claims 1 to 8, wherein the sleeve-shaped base body (10) as well as the expander element (20) are cold-formed followed by a hardening step.

## Patentansprüche

1. Verschlussvorrichtung (100) mit einem hülsenförmigen Grundkörper (10) und einem Spreizelement (20), wobei das Spreizelement (20) einen Spreizkörper (21) und ein Zugelement (22) mit einer dazwischen angeordneten Bruchkerbe (23) umfasst, wobei der Spreizkörper (21) einen kegelstumpfförmigen Kopf aufweist, dessen kleinerer Durchmesser zur Bruchkerbe (23) ausgerichtet ist, wobei der Grundkörper (10) hülsenförmig ist, eine zentrale Bohrung mit einem nach aussen gerichteten Abschnitt (43) aufweist und in Längsrichtung (110) von einer nach innen gerichteten Bohrungsoberfläche (17) zu einer nach aussen gerichteten Oberfläche (16) einen Kopfaufnahmeabschnitt (115) aufweist, gefolgt von einem sich verjüngenden Schulterabschnitt (14) und einer zentralen Öffnung (12) mit einer inneren zylindrischen Oberfläche (13) mit einer inneren Führungswand (19), die so konfiguriert ist, dass sie den Aussendurchmesser des Zugelements (22) passieren lässt, wobei der hülsenförmige Grundkörper (10) aus Aluminium oder einer Aluminiumlegierung besteht, **dadurch gekennzeichnet, dass** das Spreizelement (20) aus Aluminium oder einer Aluminiumlegierung besteht und dass in der inneren Führungswand (19) um den nach aussen gerichteten Abschnitt (43) der zentralen Bohrung des hülsenförmigen Grundkörpers (10) herum eine umlaufende Nut (18, 18') vorgesehen ist.

2. Verschlussvorrichtung (100) nach Anspruch 1, wobei die umlaufende Nut (18) in der nach aussen gerichteten Fläche (16) des Grundkörpers (10) vorgesehen ist.

3. Verschlussvorrichtung (100) nach Anspruch 1, wobei die Umfangsnut (18') von der Innenseite des Kopfaufnahmeabschnitts (115) des Grundkörpers (10) vorgesehen ist.

4. Verschlussvorrichtung (100) nach irgendeinem der Ansprüche 1 bis 3, wobei die Umfangsnut (18, 18') eine äussere zylindrische Oberfläche (13') in einem radialen Abstand von der Mittelachse des Grundkörpers (10) aufweist, wobei der radiale Abstand nicht kleiner ist als der kleinste Durchmesser des Kopfaufnahmeteils (115).

5. Verschlussvorrichtung (100) nach irgendeinem der Ansprüche 1 bis 4, wobei der Kopfaufnahmeabschnitt (115) eine zylindrische Innenfläche (113') aufweist.

6. Verschlussvorrichtung (100) nach irgendeinem der Ansprüche 1 bis 4, wobei der Kopfaufnahmeabschnitt (115) eine konische Innenfläche (113) aufweist, die sich zur nach aussen gerichteten Fläche (16) hin verjüngt.

7. Verschlussvorrichtung (100) nach irgendeinem der Ansprüche 1 bis 6, wobei der weitere Schulterabschnitt (14') und der Schulterabschnitt (14) durch eine umlaufende Ausnehmung voneinander getrennt sind.

8. Verschlussvorrichtung (100) nach Anspruch 7, wobei das Spreizelement (20) eine umlaufende Rippe (26) zwischen der Bruchkerbe (23) und dem sich verjüngenden Abschnitt (25) des kegelstumpfförmigen Kopfes (24) aufweist, die so positioniert ist, dass sie in der umlaufenden Aussparung einrastet, wenn der kegelstumpfförmige Kopf (24) in den Grundkörper (10) einrastet und der Abschnitt (25) mit dem Schulterabschnitt (14) in Kontakt steht.

9. Verschlussvorrichtung (100) nach einem der Ansprüche 1 bis 8, wobei sowohl der hülsenförmige Grundkörper (10) als auch das Spreizelement (20) kaltgeformt und anschliessend gehärtet werden.

## Revendications

1. Dispositif de fermeture (100) comprenant un corps de base (10) en forme de manchon et un élément d'expansion (20), dans lequel l'élément d'expansion (20) comprend un corps d'écartement (21) et un élément de traction (22) avec une rainure de rupture (23) entre eux, dans lequel le corps d'écartement (21) a une tête tronconique avec le plus petit diamètre orienté vers la rainure de rupture (23), dans lequel le corps de base (10) est en forme de manchon, comprend un alésage central avec une section dirigée vers l'extérieur (43) et présente, dans la direction longitudinale (110) allant d'une surface dirigée vers l'alésage intérieur (17) à une surface dirigée vers l'extérieur (16), une partie de réception de tête (115) suivie d'une partie d'épaulement effilée (14) et d'une ouverture centrale (12) ayant une surface cylindrique intérieure (13) avec une paroi de guidage intérieure (19) configurée pour permettre le passage du diamètre extérieur de l'élément de traction (22), dans lequel le corps de base (10) en forme de manchon est en aluminium ou en alliage d'aluminium, **caractérisé en ce que** l'élément d'expansion (20) est en aluminium ou en alliage d'aluminium et **en ce qu'**une rainure circonférentielle (18, 18') est prévue dans la paroi de guidage intérieure (19) autour de la section dirigée vers l'extérieur (43) de l'alésage central du corps de base en forme (10) de manchon.

2. Dispositif de fermeture (100) selon la revendication 1, dans lequel la rainure circonférentielle (18) est prévue dans la surface dirigée vers l'extérieur (16) du corps de base (10).

3. Dispositif de fermeture (100) selon la revendication 1, dans lequel la rainure circonférentielle (18') est prévue à partir de l'intérieur de la partie de réception de tête (115) du corps de base (10).

4. Dispositif de fermeture (100) selon l'une quelconque des revendications 1 à 3, dans lequel la rainure circonférentielle (18, 18') présente une surface cylindrique extérieure (13') à une distance radiale de l'axe central du corps de base (10), laquelle distance radiale n'est pas inférieure au plus petit diamètre de la partie de réception de tête (115).

5. Dispositif de fermeture (100) selon l'une quelconque des revendications 1 à 4, dans lequel la partie de réception de tête (115) présente une surface intérieure cylindrique (113').

6. Dispositif de fermeture (100) selon l'une quelconque des revendications 1 à 4, dans lequel la partie de réception de tête (115) présente une surface intérieure conique (113) qui s'effile vers la surface dirigée vers l'extérieur (16).

7. Dispositif de fermeture (100) selon l'une quelconque des revendications 1 à 6, dans lequel la partie d'épaulement supplémentaire (14') et la partie d'épaulement (14) sont séparées par un évidement circonférentiel.

8. Dispositif de fermeture (100) selon la revendication 7, dans lequel l'élément d'expansion (20) comprend une arête circonférentielle (26) entre la rainure de rupture (23) et la partie effilée (25) de la tête tronconique (24) qui est positionnée pour être logée dans le renfoncement circonférentiel, lorsque la tête tronconique (24) est logée dans le corps de base (10) et que la partie (25) est en contact avec la partie d'épaulement (14).

9. Dispositif de fermeture (100) selon l'une quelconque des revendications 1 à 8, dans lequel le corps de base (10) en forme de manchon ainsi que l'élément d'expansion (20) sont formés à froid, puis soumis à une étape de durcissement.
